# EUROPEAN PATENT SPECIFICATION

(11) **EP 1 395 141 B1**
(45) Date of publication and mention of the grant of the patent: **21.12.2005**
(21) Application number: 02727768.0
(22) Date of filing: 31.05.2002
(51) Int. Cl.: A45F 5/02

(54) **ELECTRONIC DEVICE HOLDER**
HALTER FÜR EIN ELEKTRONISCHES GERÄT
SUPPORT DE DISPOSITIF ELECTRONIQUE

(30) Priority: 01.06.2001 GB 0113356
(43) Date of publication of application: 10.03.2004
(73) Proprietor: James & Alden Plc, London NW2 6BA (GB)
(72) Inventor: ORENSTEIN, Joe, London NW2 6BA (GB)
(74) Representative: Williams, Paul Edwin
(86) International application number: PCT/GB2002/002551
(87) International publication number: WO 2002/096237

(56) References cited:
- FR-A- 2 767 907
- GB-A- 2 352 969
- US-A- 5 054 672
- US-A- 5 664 712
- US-A- 5 699 943
- US-A- 5 933 922

## Description

The present invention relates to a holder for holding a personal hand held electronic device, such as a mobile telephone, electronic organiser, personal digital assistant and the like.

An existing mobile telephone holder attempts to improve the comfort for the wearer and hold the mobile telephone in a more secure manner by having a loop or clip for attaching the holder to a belt, and a band into which the telephone is inserted, to hold the telephone with its lengthwise axis substantially parallel to the ground. The band is formed from first and second leather members which are securable by a Velcro (RTM) fastening, which apply a positive hugging force to the telephone to secure it in place within the band. However, this holder suffers from certain disadvantages. The telephone is removed from the holder by unfastening the Velcro (RTM) fastening, which is noisy, awkward for the user, can catch on and cause damage to clothing, and over time can result in wear of the Velcro (RTM), to such an extent that the fastening may eventually fail resulting in damage to or loss of the telephone. The holder also lacks versatility by being suitable for carrying only a particular size of telephone, and lacks aesthetic appeal, making it unpopular with some potential users.

US5664712 discloses a device for transporting containers, comprising a flexible, continuous, stretchable elastic strap and a fastening device attached to the strap.

US5699943 discloses a belt-mounted flashlight holder including a belt loop subassembly and a cradle subassembly that are pivotally connected to permit the mounted flashlight to be rotated to any of several detented positions.

According to the present invention there is provided a holder for holding a hand held electronic device, the holder comprising:
(i)carrying means by which a user can carry the holder;
(ii) holding means comprising (a) a substantially rigid or semi-rigid planar back plate, (b) a substantially rigid holding member having a planar surface and (c) a portion of resilient material, which holding means defines a closed loop into which, in use, said device is inserted; and
(iii) release means for, in use, releasing the device from the holder, the release means comprising either (I) at least one projection at the periphery of the holding member or (II) a push button;
wherein the portion of resilient material allows for variation in the size of the closed loop so that the holder can accommodate electronic devices of different sizes.

The holding means comprises (a) a substantially rigid or semi-rigid planar back plate, (b) a substantially rigid holding member having a planar surface and (c) a portion of resilient material, which holding means defines a closed loop into which, in use, said device is inserted and held. The closed loop comprises resilient material, such that the closed loop applies a positive hugging force to a device held therein. The closed loop comprises a single member having at least a portion of resilient material which is attached to or passes through the holding member, for example through a slit in the holding member.

Alternatively, the closed loop may comprise first and second members at least one of which has a portion of resilient material. The first and second members may be independently non-releasably attached to the holding member, or releasably attachable to the holding member, for example by clips, buckles, fasteners and the like.

The use of resilient material acts to provide a gripping force which ensures that the device is secured within the holder. Further, the flexible nature of the resilient material permits different-sized devices to be gripped by the holder. For example, the holder can accommodate different shapes and sizes of mobile phones, cameras, personal organisers or similar devices.

In use, the release means is engaged by the user to allow location into and removal of a device from the holder. In those embodiments where the release means comprises at least one projection, the projection is in a plane substantially parallel to the planar surface of the holding means. Having the projection in a plane substantially parallel to the planar surface can optimise purchase thereon for the user when locating or removing the electronic device. The release means is formed integrally with the holding member, which can increase versatility and reduce manufacturing cost.

In use, when the release means comprises at least one projection on the periphery of the holding member, the projection may be pulled by the user to stretch the resilient material and slidably locate or remove the electronic device from the holder. In this embodiment, the holding member and projection (s) may conveniently be formed from a single moulded plastics material, which may be coloured as desired, or may be transparent to allow the device to be viewed within the holder. The holding member and projection(s) may alternatively be formed from metal. In this embodiment the holding member preferably comprises opposing projections on the periphery thereof, conveniently two projections. The opposing projections may be positioned around the periphery of the holding member such that, in use, they are positioned along an axis normal to the ground, or an axis parallel to the ground. Of course, the release means may comprise more than two projections, preferably positioned equidistantly around the periphery of the holding member. The release means may comprise a projection which extends around substantially the entire periphery of the holding member.

In alternative embodiments, the loop may be openable and closable via a releasable catch or other releasable locking mechanism. For example, the release means may comprise at least one button which may be pressed by the user to release the catch or similar locking mechanism. In this embodiment, the inner surface of the closed loop may comprise means for helping to maintain a device in position within the loop. For example, the inner surface of the closed loop may include a magnetic strip, a Velcro (RTM) strip, or high friction material.

The holder may further comprise adjusting means for adjusting the size of the closed loop, in order that the holder may be used to hold a plurality of devices of differing sizes. The adjustment means conveniently allows for adjustment of the closed loop between a plurality of predetermined positions. For example, the adjustment means may comprise a plurality of stepwise projections on the holding member, at least one end of the resilient material being positionable in a plurality of positions which respectively correspond to positions between adjacent projections. Preferably, both ends of the resilient material are positionable in a plurality of positions which respectively correspond to positions between adjacent projections.

The carrying means may comprise a flexible or substantially rigid member formed as a loop through which a strap, for example a belt or bag strap, can be threaded to attach the carrying means to the strap. Alternatively, the carrying means may comprise a fastener for attaching the carrying means to a strap, for example a spring-biassed fastening, pop-fastening, or magnetically fastening clip. Alternatively, the carrying means may comprise a strap, for example for carrying the holder over a shoulder or by hand. When the holder is carried on a belt, it is preferably mounted such that the device is carried having its principle axis parallel with the longitudinal axis of the belt.

The holder preferably comprises a facia panel in a plane substantially parallel to the planar surface. The facia panel is preferably releasably attachable to the holder. A facia panel provides numerous advantages to the holder of the present invention over prior art holders. The facia panel can protect the closed loop from damage and help protect the device from ingress of dirt, water and other materials, and can help protect the device from impact and shock damage, which might result in accidental activation of the device. The facia panel may also provide added security to the user of the device by helping to prevent theft thereof. If the force required to remove the facia panel is less than the force required to remove the holder from the user, for example from the belt of a user, then a potential thief attempting to steal the holder and device will merely remove the facia panel, by which time the user is alerted to the presence of the potential thief. A releasably attachable facia panel also provides economic advantages over prior art holders. Prior art holders are unpopular with some users because they impair the aesthetic appearance of the device; however, the facia panel can be coloured, patterned, designed, etc, to match the shape, configuration, pattern, colour, or design of the device. The facia panel may provide a surface for displaying patterns, logos, marketing information, and the like. The facia panel may be transparent to allow the device to be viewed when held within the holder. A releasably attachable facia panel further allows the user to replace one facia panel with another, to match the appearance of a particular device being carried.

The facia panel may be releasably attachable to the planar member by conventional means, for example a slidable or snap-fit, as will be apparent to those skilled in the art. For example, if security is an important consideration to a user, as discussed above, then a snap-fitting facia panel will be more appropriate than a slide fitting facia panel.

The facia panel may be used to display or house features for enhancing usability of the holder. For example, the facia panel may include one or more lights, for example a light which reacts to a signal being received by the device, vibrating means which responds to a signal being received by the device, an LCD display, a hologrammatic display, a heat sensitive material, or may be used to house electronics. Alternatively, if said features are housed within the holding member, then a releasably attachable facia panel may provide access to the planar member, for example to service electronics, replace batteries, etc.

The closed loop may have an at least partially cushioned inner surface, to help prevent scratching of the device by the holding member when slidably locating and removing the device from the holder. For example, the cushioned inner surface may include a cushioning polymeric material, or may include a material which is mouldable under pressure, i.e. on location of a device within the closed loop the material will mould to the shape of the surface of the device.

The holding means may further comprise one or more straps of resilient material which extend generally parallel to the lengthwise axis of the device being held by the holder. These straps act to further secure an device within the holder.

Preferably, said holder comprises a mobile phone holder.

The present invention will now be described by way of example with reference to the accompanying drawings, in which:
Figure 1 shows an oblique partially exploded view of a first embodiment of a holder according to the present invention.
Figure 2 shows a cross-sectional side view of the embodiment shown in Figure 1.
Figure 3 shows a front view of a second embodiment of a holder according to the present invention.
Figure 4 shows a cross-sectional partial side view of the embodiment shown in Figure 3.
Figure 5 shows an oblique partial exploded perspective view of the embodiment shown in Figures 3 and 4.
Figure 6 shows a front oblique view of a third embodiment of a holder according to the present invention.
Figure 7 shows a rear oblique view of the embodiment shown in Figure 6 with the closed loop open.
Figure 8 shows a cross-sectional side view of the embodiment shown in Figures 6 and 7.

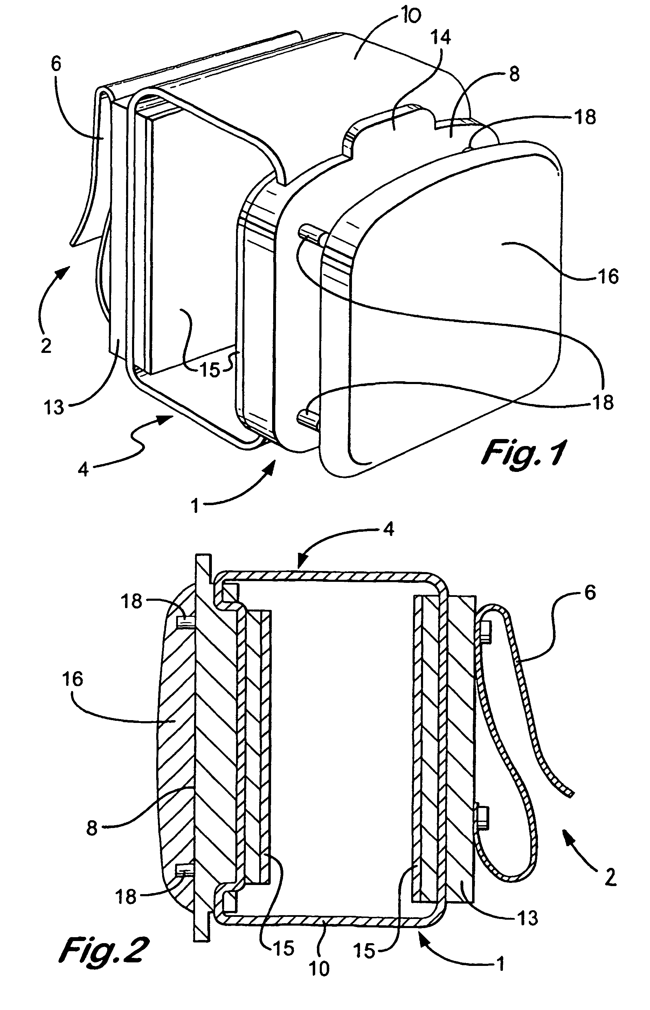

Referring to Figures 1 and 2, a first embodiment of a holder 1 of the present invention comprises carrying means 2 and holding means 4. The carrying means 2 comprises a belt clip 6, and the holding means comprises a holding member 8 having a planar surface and a closed loop 10 of resilient material. The closed loop 10 passes through the holding member 8. The belt clip 6 and closed loop 10 are both attached to a back plate 13, the closed loop including a cushioning material 15 on the inside thereof adjacent the holding member 8 and the back plate 13. The back plate 13 may be substantially rigid or semi-rigid, and may be made of any suitable material, for example a plastics material or leather. The holding member 8 further comprises integral release means in the form of two opposing projections 14 (only one of which is shown in Figure 1) which are positioned in the plane of the planar surface of the holding member 8 and in an axis normal to the ground in use. Of course, the projections 14 may extend from any sides of the periphery of the holding member 8, or the release means may comprise a single projection which extends around substantially the entire periphery of the holding member 8. The holder 1 further comprises a facia panel 16 which is releasably attachable to the planar member 8 by lugs 18.

In use, the holder 1 is attached to a belt using belt clip 6. When wearing the belt, the user then pulls on projections 14 to stretch the closed loop 10 and thereby enable a device to be inserted within the closed loop 10. The user then slowly releases the projections 14 to allow the closed loop 10 to contract around the device, which is thereby held within the closed loop 10 between the holding member 8 and the back plate 13.

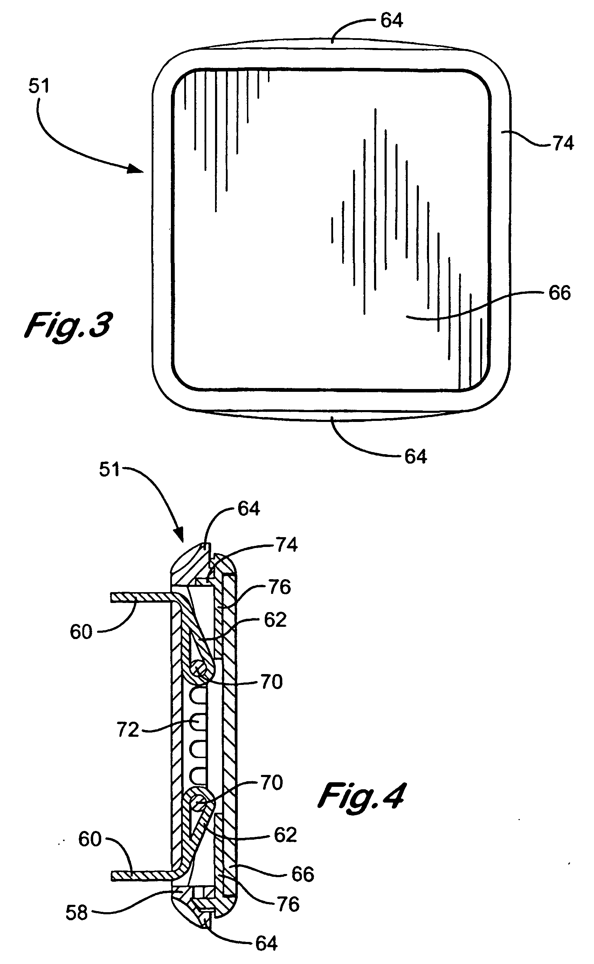

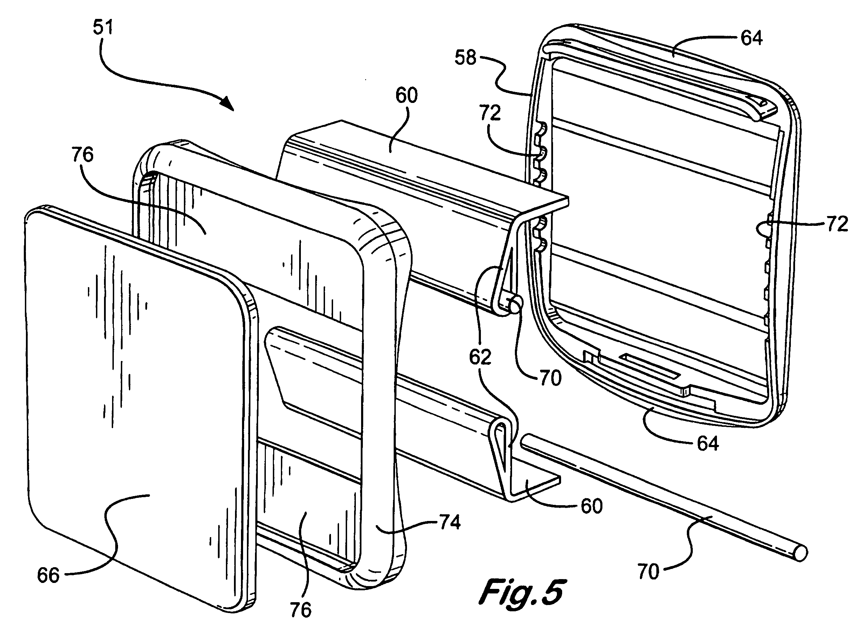

Referring to Figures 3, 4 and 5, a second embodiment of a holder 51 of the present invention is shown. The second embodiment holder may comprise the same carrying means 2, back plate 13 and cushioning material 15 as for the first embodiment, none of which are shown in Figures 3, 4 or 5.

The holder 51 comprises a holding member 58 having a planar surface and integral opposing projections 64 positioned in the plane of the holding member 58. The closed loop is formed from resilient material 60 and the holding member 58 together. The resilient material 60 per se does not form a closed loop, but rather is open, the open ends of the resilient material 60 each themselves forming a loop 62. Within each loop 62 an adjustment rod 70 is inserted. The holding member 58 also comprises adjustment means for adjusting the size of the closed loop. The adjustment means comprises a plurality of stepwise projections 72, the rods 70 being positionable between adjacent projections 72. In this way, the size of the closed loop can be adjusted, to accommodate devices of different sizes. The holder 51 further comprises a front moulding 74 which fits onto the holding member 58. A facia panel 66 sits on support members 76 formed in the front moulding 74. Alternatively, the facia panel 66 and front moulding 74 may be formed as a unitary piece.

The holder 51 of the second embodiment is used in substantially the same way as the holder 1 of the first embodiment, with the exception that with the holder 51 the user may adjust the size of the closed loop according to the size of the device to be held by the holder 51. Thus, the user chooses an appropriate size for the closed loop by positioning rods 70 between appropriate projections 72. Then, to insert a device within the holder 51, the user pulls on projections 64 to stretch the closed loop and thereby enable a device to be inserted within the closed loop. The user then slowly releases the projections 64 to allow the closed loop to contract around the device, which is thereby held within the closed loop between the holding member 58 and the back plate (not shown in Figures 3 to 5).

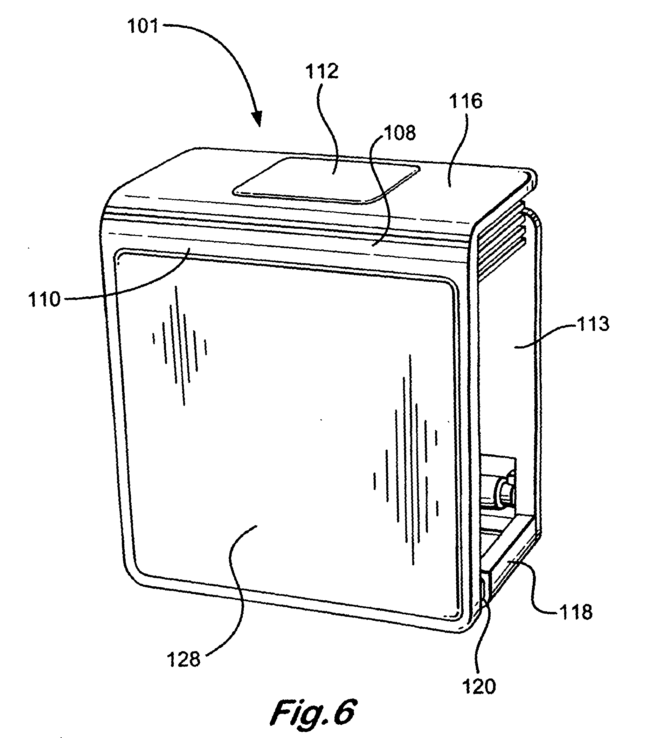

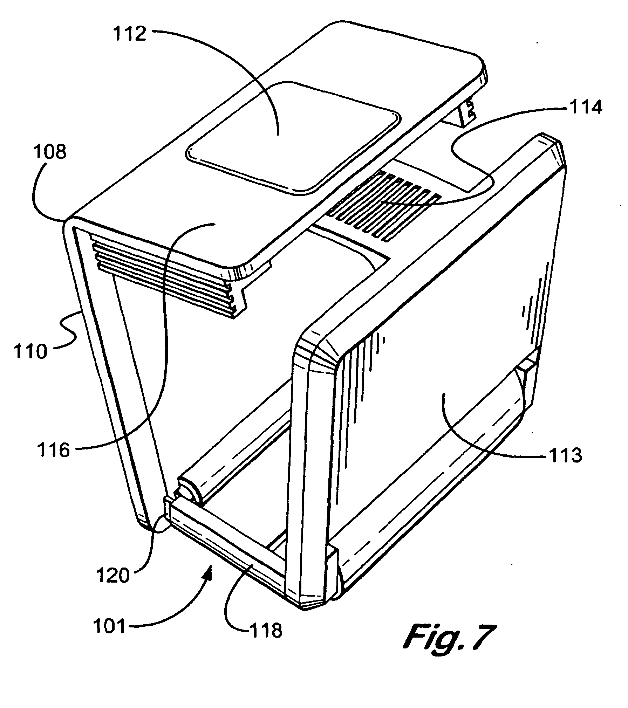

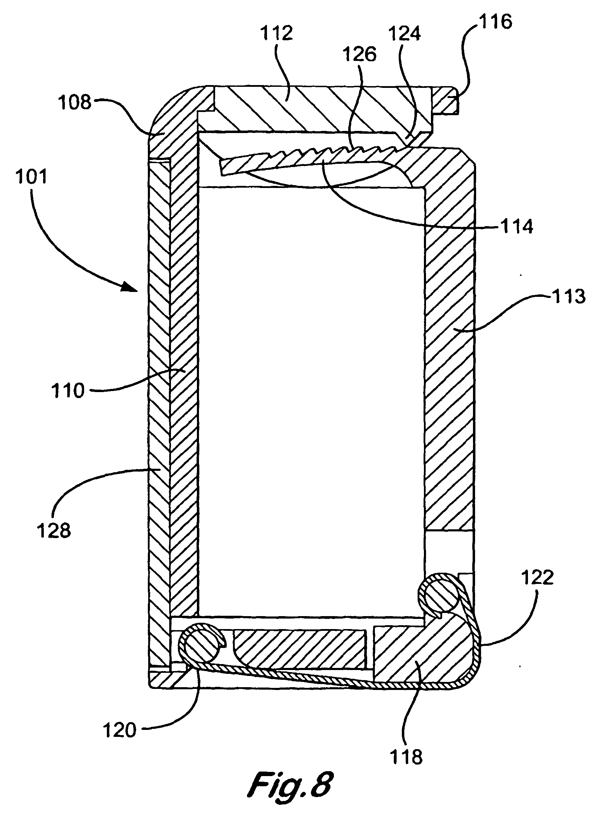

Referring to Figures 6, 7 and 8, a third embodiment of a holder 101 of the present invention is shown. The third embodiment holder 101 may comprise the same carrying means 2 as for the first embodiment, which feature is not shown in Figures 6, 7 or 8.

By comparison with the first and second embodiments, the holder 101 is substantially rigid. The closed loop is formed from a holding member 108 comprising a planar surface 110 and an upper section 116, together with a lower section 118 and back plate 113. The lower section 118 and backplate 113 are held together by an elasticated member 122 fitted therebetween. The elasticated member 122 allows for variation in the size of the closed loop, and therefore allows the holder to accommodate devices of different sizes. The holder 110 is openable by a hinge 120 between the holding member 108 and the back plate 113. The holding member 108 comprises release means which comprise a push button 112, positioned within the upper section 116 of the a holding member 108 in a plane substantially perpendicular to the planar surface 110. The closed loop is formed and maintained by engagement between a catch 124 on the underside of the push button 112 and a ratchet surface 126 of an engaging member 114 which inwardly extends from the back plate 113. When the closed loop is formed, the catch 124 can be released from the recess 126 by pushing the push button 112. The holder 101 further comprises a facia panel 128 which fits within the planar surface 110 of the holding member 108.

In use, when the push button 112 is pressed by the user, the catch 124 pushes on the engaging member 114, which in turn pushes on the backplate 113, thus stretching the elasticated member 122. It is by virtue of this stretching of the elasticated member that the catch 124 can be released from the ratchet surface 126, and the holding member 108 can thereby be rotated about the hinge 120 to open the closed loop. A device may thus be inserted into the holder 101, after which the holding member 108 can be re-rotated about the hinge 120, and the catch 124 can re-engage with the ratchet surface 126 to thereby close the closed loop.

As referred to hereinabove, in the third embodiment the inner surface of the closed loop, for example the inner surface of the back plate 113, may comprise means for helping to maintain a device in position within the loop. For example, the inner surface of the closed loop may include a magnetic strip, a Velcro (RTM) strip, or high friction material. Whilst the present invention has been specifically described with reference to mobile phones, it will be appreciated that the holder can be used for holding personal organisers and other similar personal electronic equipment. The holder offers a solution to holding such devices which is simple, cost effective to produce, and can be applied in many situations. Moreover, the term strap includes at least a belt or strap of an device which is carried by a person in use.

## Claims

1. A holder (1;51;101) for holding a hand held electronic device, the holder comprising:
(i)carrying means (2) by which a user can carry the holder;
(ii) holding means comprising (a) a substantially rigid or semi-rigid planar back plate (13;113), (b) a substantially rigid holding member (8;58;108) having a planar surface and (c) a portion of resilient material (10;60;122), which holding means defines a closed loop into which, in use, said device is inserted; and
(iii) release means (14;64;112) for, in use, releasing the device from the holder, the release means comprising either (I) at least one projection (14;64) at the periphery of the holding member or (II) a push button (112);
wherein the portion of resilient material allows for variation in the size of the closed loop so that the holder can accommodate electronic devices of different sizes.

2. A holder according to claim 1 which further comprises a facia panel (16;66) in a plane substantially parallel to the planar surface.

3. A holder according to claim 2 wherein the facia panel is releasably attachable to the holder.

4. A holder according to any preceding claim wherein the release means comprises opposing projections (14;64) on the periphery of the holding member.

5. A holder according to any preceding claim wherein the closed loop includes an at least partially cushioned inner surface (15).

6. A holder according to any preceding claim which further comprises adjusting means (70,72) for adjusting the size of the closed loop.

7. A holder according to claim 6 wherein the adjusting means allows for adjustment of the closed loop between a plurality of predetermined positions (72).

8. A holder according to claim 7 wherein the adjusting means comprises a plurality of stepwise projections on the holding member, at least one end (70) of the resilient material being positionable in a plurality of positions which respectively correspond to positions between adjacent projections.

9. A holder according to claim 8 wherein both ends of the resilient material are positionable in a plurality of positions which respectively correspond to positions between adjacent projections.

## Patentansprüche

1. Halter (1;51;101) zum Halten eines elektronischen Handgeräts, wobei der Halter folgendes aufweist:
(i) eine Trageinrichtung (2), mittels der ein Anwender den Halter mitführen kann;
(ii) eine Halteeinrichtung, welche (a) eine im wesentlichen starre oder halbstarre ebene Rückplatte (13;113), (b) ein im wesentlichen starres Halteteil (8;58;108), welches eine plane Fläche hat und (c) einen Abschnitt aus einem federnd nachgiebigen Material (10;60;122) aufweist, wobei die Halteeinrichtung eine geschlossene Schlaufe bildet, in welcher der Anwender das Gerät einsetzen kann; und
(iii) eine Löseeinrichtung (14;64;112), welche im Gebrauchszustand ein Trennen des Geräts von dern Halter gestattet, wobei die Löseeinrichtung entweder (I) wenigstens einen Vorsprung (14;64) am Umfang des Halteteils oder (II) eine Drucktaste (112) aufweist;
wobei der Abschnitt aus federnd nachgiebigem Material eine Veränderung der Größe der geschlossenen Schlaufe derart gestattet, dass der Halter elektronische Geräte mit unterschiedlichen Abmessungen aufnehmen kann.

2. Halter nach Anspruch 1, welcher femer eine Sichtverkleidung (16;66) in einer Ebene im wesentlichen parallel zu der ebenen Fläche aufweist.

3. Halter nach Anspruch 2, bei dem die Sichtverkleidung lösbar an dem Halter angebracht ist.

4. Halter nach einem der vorangehenden Ansprüche, bei dem die Löseeinrichtung gegenüberliegende Vorsprünge (14;64) am Umfang des Halteteils aufweist.

5. Halter nach einem der vorangehenden Ansprüche, bei dem die geschlossene Schlaufe eine wenigstens teilweise gepolsterte Innenfläche (15) aufweist.

6. Halter nach einem der vorangehenden Ansprüche, bei dem ferner eine Einstelleinrichtung (70,72) zum Einstellen der Größe der geschlossenen Schlaufe vorgesehen ist.

7. Halter nach Anspruch 6, bei dem die Einstelleinrichtung eine Einstellung der geschlossenen Schlaufe zwischen einer Mehrzahl von vorbestimmten Positionen (72) gestattet.

8. Halter nach Anspruch 7, bei dem die Einstelleinrichtung eine Mehrzahl von stufenweise vorstehenden Vorsprüngen an dem Halteteil aufweist, und wenigstens ein Ende (70) des federnd nachgiebigen Materials in einer Mehrzahl von Positionen anordenbar ist, welche den Positionen zwischen benachbarten Vorsprüngen entsprechen.

9. Halter nach Anspruch 8, bei dem beide Enden des federnd nachgiebigen Materials an: einer Mehrzahl von Positionen anordenbar sind, welche jeweils den Positionen zwischen benachbarten Vorsprüngen zugeordnet sind.

## Revendications

1. Support (1 ; 51 ; 101) pour tenir un dispositif électronique portatif, le support comprenant :
(i) un moyen de transport (2) par lequel un utilisateur peut transporter le support ;
(ii) un moyen de support comprenant (a) une plaque arrière plane, sensiblement rigide ou semi-rigide (13 ; 113), (b) un élément de support sensiblement rigide (8 ; 58 ; 108) ayant une surface plane, et (c) une partie de matière élastique (10 ;60 ;122), lequel moyen de support définit une boucle fermée dans laquelle, lors de l'utilisation, ledit dispositif est introduit ; et
(iii)un moyen de libération (14 ; 64 ; 112) pour, lors de l'utilisation, libérer le dispositif à partir du support, le moyen de libération comprenant soit (I) au moins une projection (14 ; 64) à la périphérie de l'élément de support, soit (II) un bouton-poussoir (112) ;
dans lequel la partie de matière élastique permet une variation de la dimension de la boucle fermée de telle sorte que le support peut recevoir des dispositifs électroniques de différentes dimensions.

2. Support selon la revendication 1, qui comprend en outre un panneau de façade (16 ; 66) dans un plan sensiblement parallèle à la surface plane.

3. Support selon la revendication 2, dans lequel le panneau de façade est susceptible d'être attaché de façon libérable au support.

4. Support selon l'une quelconque des revendications précédentes, dans lequel le moyen de libération comprend des projections opposées (14 ; 64) sur la périphérie de l'élément de support.

5. Support selon l'une quelconque des revendications précédentes, dans lequel la boucle fermée comprend une surface interne (15) au moins partiellement amortie.

6. Support selon l'une quelconque des revendications précédentes, qui comprend en outre un moyen d'ajustement (70, 72) pour ajuster la dimension de la boucle fermée.

7. Support selon la revendication 6, dans lequel le moyen d'ajustement permet l'ajustement de la boucle fermée entre une pluralité de positions prédéterminées (72).

8. Support selon la revendication 7, dans lequel le moyen d'ajustement comprend une pluralité de projections en étages sur l'élément de support, au moins une extrémité (70) de la matière élastique pouvant être positionnée dans une pluralité de positions lesquelles correspondent respectivement à des positions entre des projections adjacentes.

9. Support selon la revendication 8, dans lequel les deux extrémités de la matière élastique peuvent être positionnées dans une pluralité de positions qui correspondent respectivement à des positions entre des projections adjacentes.
